# FASCICULE DE BREVET EUROPEEN

(11) **EP 1 730 079 B1**
(45) Date de publication et mention de la délivrance du brevet: **23.06.2010**
(21) Numéro de dépôt: 05739461.1
(22) Date de dépôt: 16.03.2005
(51) Int. Cl.: C02F 1/04, C02F 1/06, B01D 1/26, B01D 3/14, B01D 1/22

(54) **PROCEDE ET INSTALLATION DE DESSALEMENT D"EAU DE MER PAR DISTILLATION A EFFETS MULTIPLES ET THERMOCOMPRESSION DE VAPEUR FONCTIONNANT AVEC DIFFERENTES PRESSIONS DE VAPEUR MOTRICE**
VERFAHREN UND ANLAGE ZUR ENTSALZUNG VON MEERWASSER DURCH MULTIEFFEKTDESTILLATION MIT THERMISCHER DAMPFKOMPRESSION MIT VERSCHIEDENEN ARBEITSDAMPFDRÜCKEN
METHOD AND PLANT FOR DESALINATING SEA WATER BY MULTI-EFFECT DISTILLATION WITH THERMO-VAPOR COMPRESSION OPERATING WITH DIFFERENT LIVE STREAM PRESSURES

(30) Priorité: 18.03.2004 FR 0402800; 29.06.2004 FR 0407131
(43) Date de publication de la demande: 13.12.2006
(73) Titulaire: Société Internationale de Dessalement - SIDEM, 75009 Paris (FR)
(72) Inventeur: BAUJAT, Vincent, F-78150 Le Chesnay (FR); CANTON, Gérard, F-92260 Fontenay-Aux-Roses (FR); LABORIE, Jeanne, F-95530 Le Frette-Sur-Seine (FR)
(74) Mandataire: Largeau, Béatrice
(86) Numéro de dépôt international: PCT/FR2005/000630
(87) Numéro de publication internationale: WO 2005/100252

(56) Documents cités:
- WO-A-98/25679
- GB-A- 967 929
- GB-A- 980 659
- GB-A- 1 220 373
- US-A- 3 444 049
- US-A- 3 597 328
- US-A- 4 036 749
- US-A- 4 820 542
- US-A- 5 409 576
- US-B1- 6 508 936
- US-B1- 6 536 523
- ALY S E: "A study of a new thermal vapor compression/multi-effect stack (TVC/MES) low temperature distillation system" DESALINATION, ELSEVIER, AMSTERDAM, NL, vol. 103, no. 3, décembre 1995 (1995-12), pages 257-263, XP004019070 ISSN: 0011-9164
- ATKINS T E ET AL: "POWER/DESAL PLANT EVOLVES TO MEET CHANGING NEEDS" POWER, HILL PUB. CO., NEW YORK, NY, US, vol. 137, no. 8, 1 août 1993 (1993-08-01), page 10,12, XP000385822 ISSN: 0032-5929

## Description

L'invention concerne un procédé amélioré de dessalement d'eau de mer par distillation à effets multiples et thermocompression de vapeur, ainsi qu'une installation de dessalement d'eau de mer permettant de mettre en oeuvre un tel procédé.

La distillation à effets multiples (MED, *multiple effect distillation*) est, à côté de la distillation par détentes successives, l'une des deux principales méthodes industrielles de dessalement de l'eau de mer imitant le cycle naturel de l'eau (évaporation-condensation-pluie).

Cette méthode met à profit la chaleur de condensation, libérée lors de la condensation d'une première quantité de vapeur d'eau, po-ur vaporiser de l'eau de mer et générer ainsi de nouveau de la vapeur d'eau susceptible d'être condensée, etc... Cette succession d'évaporations et de condensations n'est possible qu'à condition que la pression de vaporisation diminue suffisamment à chaque étape pour permettre un abaissement correspondant de la température de vaporisation.

Une installation de dessalement d'eau de mer par distillation à effets multiples comprend ainsi une multitude de chambres ou cellules de distillation juxtaposées, appelées « effets », qui fonctionnent à des pressions et températures décroissantes du premier au dernier effet. Le premier effet, qui est aussi le plus chaud, est alimenté par de la vapeur d'eau se condensant à une température généralement comprise entre environ 60 et 70 °C (vapeur de chauffe). La condensation de cette vapeur chaude dans l'échangeur de chaleur du premier effet libère de la chaleur de condensation. Cette chaleur de condensation fournit l'énergie de vaporisation (chaleur latente d'évaporation) nécessaire pour transformer en vapeur une partie de l'eau de mer s'écoulant en film mince sur l'autre face de l'échangeur de chaleur. La vapeur d'eau ainsi formée peut être utilisée pour alimenter l'échangeur de chaleur d'un deuxième effet de conception similaire au premier mais fonctionnant à une température et une pression plus basses.

La condensation d'un kg de vapeur de chauffe dans le premier échangeur de chaleur produit à peu près la même quantité de vapeur et, en première approximation, une telle installation à *n* cellules, ou effets, permettra ainsi de produire n kg d'eau distillée par kg de vapeur de chauffe.

Le nombre d'effets est toutefois limité par l'écart entre la température de la vapeur de chauffe, que l'on cherche généralement à limiter pour minimiser les risques d'entartrage du système, et la température de l'eau de mer à dessaler qui constitue la source froide du système. Le nombre d'effets d'une installation est généralement compris entre 2 et 12.

La partie de distillation proprement dite est en outre souvent combinée à un système de compression de la vapeur produite. Cette compression peut se faire par un compresseur mécanique (compression mécanique de vapeur) ou par un éjecteur à jet de vapeur (compression thermique ou thermocompression de vapeur). Un éjecteur à jet de vapeur, également appelé thermocompresseur à effet Venturi, utilise l'énergie cinétique d'une vapeur d'eau (vapeur motrice), injectée sous pression par une ou plusieurs tuyère(s) dans une zone de plus faible pression, pour aspirer et entraîner de la vapeur d'eau à basse pression et basse température et comprimer le mélange obtenu jusqu'à une pression suffisante pour permettre son utilisation en tant que vapeur de chauffe de l'effet le plus chaud.

Seule cette technique de thermocompression de vapeur est utilisée dans la présente invention.

Les installations industrielles de dessalement d'eau de mer par distillation à effets multiples sont en outre souvent couplées à une centrale thermique. Une centrale thermique produit en effet en sortie de turbine une grande quantité de vapeur d'eau qui constitue une source d'énergie récupérable importante. L'idée a été d'utiliser cette vapeur d'eau en tant que vapeur d'alimentation (vapeur motrice V_{M}) d'un éjecteur à jet de vapeur dans une installation de dessalement d'eau de mer.

Dans le cas d'un tel couplage d'une installation de dessalement en sortie de turbine d'une centrale thermique se pose alors le problème de l'instabilité de la demande en électricité. L'électricité est un bien non stockable et la production d'électricité doit être constamment adaptée aux besoins des ménages et de l'industrie. Les grandes centrales thermiques doivent répondre en particulier à une demande électrique qui varie en fonction des saisons alors que la demande en eau potable reste à peu près constante sur l'année.

La variation de la production d'électricité d'une centrale se traduit par la variation de la quantité de vapeur d'eau en sortie de turbine et de la pression de cette vapeur. En cas de production intense, la quantité de vapeur produite est grande et la vapeur libérée, ayant subi une détente importante dans la turbine, sera à une pression la plus basse possible. Inversement, lorsque la demande en énergie électrique est faible, on produira moins de vapeur et celle-ci, ayant subi une moindre détente dans la turbine ou aucune détente, sera à une pression plus élevée.

Les installations de dessalement par distillation à effets multiples et thermocompression (MED-TVC) actuelles sont optimisées pour une pression de vapeur motrice unique, relativement faible, correspondant à une production d'électricité intense. En cas de baisse de la production énergétique dans une telle installation, le peu de vapeur disponible à haute pression est détendu dans une vanne jusqu'à la pression d'alimentation nominale et des chaudières auxiliaires sont nécessaires pour produire de la vapeur d'appoint, indispensable pour assurer une production constante d'eau douce. Cette vapeur d'appoint peut aussi être obtenue par détente de la vapeur haute pression, normalement destinée à l'alimentation des turbines, jusqu'à la pression nominale du thermocompresseur.

On comprend aisément que cette manière de faire est peu rentable d'un point de vue énergétique : il est nécessaire de fournir une quantité d'énergie importante pour produire la vapeur d'eau d'appoint par des chaudières auxiliaires ou par la centrale et l'énergie de détente de la vapeur d'eau est perdue. Le prix global de l'eau produite s'en trouvera augmenté de manière non négligeable.

La présente invention se propose de résoudre le problème énoncé ci-dessus et d'améliorer la flexibilité du couplage d'une installation de dessalement d'eau de mer à une centrale thermique en utilisant non pas un seul éjecteur à vapeur fonctionnant avec une pression de vapeur motrice fixe, mais un moyen de thermocompression à effet Venturi capable de fonctionner alternativement à différentes pressions de vapeur motrice. Ce moyen de thermocompression à effet Venturi peut être constitué soit d'au moins deux éjecteurs distincts, optimisés pour fonctionner chacun à une pression de vapeur motrice différente de celle(s) du ou des autres éjecteurs, soit d'un thermocompresseur à effet Venturi unique et de plusieurs buses différentes, amovibles, montées alternativement sur le thermocompresseur unique, chacune des buses permettant de faire fonctionner le thermocompresseur à une pression de vapeur motrice donnée.

Dans la présente demande, on utilisera indifféremment les termes « éjecteur », « éjectocompresseur », « thermocompresseur », « thermocompresseur à effet Venturi » ou « compresseur thermique » pour désigner un éjecteur à jet de vapeur qui utilise l'énergie cinétique d'une vapeur d'eau (vapeur motrice), injectée sous pression par une ou plusieurs tuyère(s) dans une zone de plus faible pression, pour aspirer et entraîner de la vapeur d'eau à basse pression et basse température et comprimer le mélange obtenu jusqu'à une pression souhaitée.

Les brevets GB 1 220 373, US 5 409 576 et US 3 444 049 et la demande internationale WO 98/25679 divulguent des installations de dessalement d'eau de mer comportant une unité de distillation à effets multiples avec recyclage de la vapeur d'eau. Ces documents soit ne précisent pas la nature du compresseur utilisé pour le recyclage de la vapeur d'eau, soit divulguent des compresseurs mécaniques entraînés par exemple par un moteur diesel ou électrique ou par une turbine à vapeur (turbocompresseur). Aucun de ces documents ne formule ni ne résout lé problème de la présente invention découlant du couplage d'une installation de dessalement par distillation à effets multiples à une centrale thermique.

Le brevet GB 967 929 décrit un échangeur de chaleur et plus particulièrement un appareil de distillation à effets multiples fonctionnant selon le principe du film turbulent. Des compresseurs compriment une partie de la vapeur provenant de la partie inférieure de chaque effet pour la réinjecter dans la partie supérieure du même effet: Il ne s'agit donc pas d'un recyclage de la vapeur à partir d'un effet à faible pression vers le premier effet.

L'invention a par conséquent pour objet une installation de dessalement d'eau de mer par distillation à effets multiples (MED) avec thermocompression de vapeur (TVC), destinée à être couplée à une centrale thermique, selon la revendication 1

La Demanderesse a envisagé en particulier deux modes de réalisation permettant de faire fonctionner le moyen de thermocompression alternativement à deux pressions de vapeur motrice différentes.

Dans un premier mode de réalisation, le moyen de thermocompression est constitué, non pas d'un seul éjectocompresseur, mais d'au moins deux éjectocompresseurs différents fonctionnant alternativement et à des pressions de vapeur motrice différentes et montés en parallèle entre le premier effet et le ou les effets de prélèvement de la vapeur d'eau.

Dans un deuxième mode de réalisation, le moyen de thermocompression est constitué d'un seul éjectocompresseur à buse d'injection amovible. Cette buse peut être remplacée à tout moment et en particulier, lorsque la variation de la pression de vapeur motrice l'exige, par une autre buse fonctionnant à une pression de vapeur motrice V_{M} différente. Ce deuxième mode de réalisation présente par rapport au premier l'avantage supplémentaire d'un coût réduit car il n'implique pas le doublement ou triplement de l'ensemble des moyens de thermocompression (éjectocompresseur) mais uniquement de la buse d'injection.

L'invention a en outre pour objet un procédé de dessalement d'eau de mer par distillation à effets multiples avec thermocompression de vapeur utilisant l'installation ci-dessus. Ce procédé comprend les étapes (a) à (f) suivantes :
(a) vaporisation, dans le premier d'une série d'effets, d'eau de mer s'écoulant par gravité en film mince sur un premier échangeur de chaleur chauffé par de la vapeur d'eau jusqu'à une température suffisante pour vaporiser ladite eau de mer,
(b) le transfert de la vapeur d'eau formée, en tant que fluide caloporteur, dans l'échangeur de chaleur de l'effet suivant fonctionnant à une température et une pression inférieures à celles de l'effet précédent,
(c) la condensation de la vapeur d'eau dans l'échangeur de chaleur de l'effet suivant et,
(d) grâce à la chaleur de condensation libérée, la vaporisation d'eau de mer s'écoulant en film mince sur ledit échangeur de chaleur, la succession des étapes (b) à (d) étant répétée autant de fois que l'installation comporte d'effets supplémentaires fonctionnant chacun à une température et une pression inférieures à celles de l'effet précédent,
(e) l'aspiration et la compression d'une partie de la vapeur d'eau V_{A} sortant d'un des effets (effet de prélèvement) par un éjectocompresseur alimenté par de la vapeur motrice V_{M} provenant de la turbine d'une centrale thermique, et
(f) réinjection du mélange V_{A} + V_{M} comprimé en tant que fluide caloporteur dans l'échangeur de chaleur du premier effet de l'étape (a), mais se distingue du procédé connu par le fait qu'en cas de modification importante de la pression de la vapeur motrice V_{M} disponible en sortie de turbine, on fait fonctionner l'installation de dessalement avec un éjectocompresseur différent ou avec le même éjectocompresseur modifié par remplacement de sa buse d'injection, travaillant à une pression de vapeur motrice V_{M} supérieure ou inférieure à celle du premier éjectocompresseur ou de l'éjectocompresseur non modifié respectivement.

L'installation de dessalement par MED de la présente invention est ainsi conçue pour pouvoir fonctionner, en fonction de la quantité et de la qualité de vapeur motrice disponible, alternativement avec l'un quelconque des différents éjecteurs ou alternativement avec deux ou trois buses d'injection amovibles, travaillant chacun(e) à une pression motrice V_{M} différente. Ainsi, lorsque la centrale répond à une forte demande en électricité, beaucoup de vapeur basse pression est disponible et l'installation fonctionnera avec un éjecteur basse pression. Au contraire, lorsque la demande énergétique baisse, la turbine libère une plus faible quantité de vapeur à pression plus importante et l'on choisira alors de faire fonctionner l'installation MED-TVC avec un éjecteur haute pression. Le fait que la quantité de vapeur motrice baisse n'est aucunement gênant pour la performance du système de dessalement. En effet, le rendement de l'éjecteur haute pression, c'est-à-dire la quantité de vapeur basse pression aspirée, par chaque kg de vapeur motrice, à partir de l'effet de prélèvement, est d'autant plus important que la pression motrice est élevée. La quantité moindre de vapeur motrice est ainsi compensée par l'énergie cinétique plus importante de celle-ci et le système de dessalement pourra assurer une production stable d'eau douce, malgré la variation de la production électrique.

Bien que l'on pourrait concevoir théoriquement un procédé ou une installation de dessalement comportant un grand nombre d'éjecteurs fonctionnant chacun à une pression donnée, le nombre d'éjecteurs ne dépasse avantageusement pas deux ou trois. En effet, au-delà de ce nombre, le gain d'énergie réalisé grâce à la présence d'un compresseur supplémentaire ne permet généralement pas de compenser le coût supplémentaire de celui-ci. Ceci est vrai également, mais dans une moindre mesure, pour le mode de réalisation comprenant un éjectocompresseur unique qui fonctionne alternativement avec des buses différentes.

On utilisera de préférence un procédé et une installation avec deux compresseurs, ou avec un compresseur fonctionnant alternativement avec deux buses, lorsque les variations de la demande énergétique sont très marquées, passant en peu de temps d'une faible demande à une demande importante et *vice versa.* Un troisième compresseur, ou une troisième buse, pourrait être utile lorsque la variation de la demande énergétique se fait très progressivement et reste pendant un temps relativement important à un niveau intermédiaire entre la demande maximale et minimale.

Il peut être utile, voire nécessaire, pour des raisons de taille maximale, de remplacer un ou plusieurs des thermocompresseurs par un ensemble de thermocompresseurs plus petits, montés en parallèle et fonctionnant dans les mêmes conditions, notamment avec une même pression de vapeur motrice. Chacun de ces thermocompresseurs plus petits assurera alors une certaine fraction du débit total demandé. Le terme « thermocompresseur » et ses équivalents utilisés dans la présente demande englobent par conséquent également un tel ensemble de thermocompresseurs fonctionnant dans des conditions identiques.

De manière connue, chaque thermocompresseur, pour pouvoir fonctionner de manière optimale doit être alimenté avec de la vapeur motrice ayant une pression donnée et tolère mal une variation excessive de cette pression.

L'éjectocompresseur basse pression, ou l'éjectocompresseur à buse basse pression, utilisé en cas de demande énergétique forte, est de préférence un éjectocompresseur fonctionnant à une pression de vapeur motrice comprise entre 1,5 et 8 bars, de préférence entre 2 et 5 bars. L'éjectocompresseur haute pression, ou l'éjectocompresseur à buse haute pression, utilisé en cas de faible demande énergétique, est de préférence un éjectocompresseur fonctionnant à une pression de vapeur motrice comprise entre 10 et 50 bars, de préférence entre 15 et 45 bars et en particulier entre 20 et 40 bars.

Lorsqu'on utilise, en cas de demande énergétique moyenne, un ou plusieurs éjectocompresseurs ou buses intermédiaires supplémentaires, ces derniers seront choisis de manière à fonctionner à des pressions de vapeur motrice intermédiaires entre les deux premières.

La vapeur aspirée par chacun des compresseurs peut être prélevée dans le dernier de la série d'effets fonctionnant à la température et à la pression la plus basse, mais ceci n'est pas forcément le cas. En effet, pour optimiser le coût de construction de l'évaporateur, il peut dans certains cas être intéressant d'aspirer la vapeur basse pression à recycler à partir d'un effet, appelé ci-après « effet de prélèvement », situé en amont du dernier effet.

Les deux éjectocompresseurs peuvent aspirer la vapeur à partir d'un seul et même effet de prélèvement, ou bien ils peuvent être raccordés chacun respectivement à un effet différent à partir duquel ils aspirent la vapeur basse pression. Ces deux modes de réalisation sont expliqués en détail ci-après en référence aux dessins annexés.

Lorsque deux éjectocompresseurs sont raccordés respectivement à deux effets de prélèvement différents, l'éjectocompresseur fonctionnant avec la pression de vapeur motrice V_{M} la plus importante aspire de la vapeur d'eau V_{A} de préférence à partir de l'effet de prélèvement le plus en aval dans la série d'effets et l'éjectocompresseur fonctionnant avec la pression de vapeur motrice V_{M} la plus faible aspire de la vapeur d'eau V_{A} à partir de l'effet de prélèvement le plus en amont dans la série d'effets.

Dans le mode de réalisation comportant au moins deux compresseurs, ces différents éjectocompresseurs ne fonctionnent à aucun moment en même temps. Lorsque, suite à une variation importante de la demande énergétique, il s'agit de basculer d'un éjectocompresseur vers un autre, il est nécessaire d'arrêter dans un premier temps le compresseur en activité et d'obturer parfaitement la voie de passage de la vapeur d'eau à travers ce compresseur, d'ouvrir la voie de passage de la vapeur d'eau à travers le second compresseur, puis de mettre en route le deuxième compresseur en l'alimentant avec de la vapeur motrice à une pression appropriée. L'obturation de la voie de passage de la vapeur d'eau à travers les compresseurs peut se faire en aval ou en amont de l'éjectocompresseur, par exemple par fermeture d'une vanne, ou encore à l'intérieur même du compresseur, par exemple à l'aide d'un bouchon approprié.

L'invention est maintenant décrite en référence aux dessins annexé s, non limitatifs, dans lesquels :
- la figure 1 est un schéma montrant un premier mode de réalisation d'une installation de dessalement d'eau de mer à effets multiples avec thermocompression de vapeur (MED-TVC) où deux éjectocompresseurs montés en parallèle prélèvent de la vapeur basse pression à partir d'un seul et même effet de prélèvement, et
- la figure 2 est un schéma montrant un deuxième mode de réalisation d'une installation de dessalement MED-TVC où deux éjectocompresseurs, montés en parallèle, prélèvent de la vapeur basse pression à partir de deux effets de prélèvement différents.

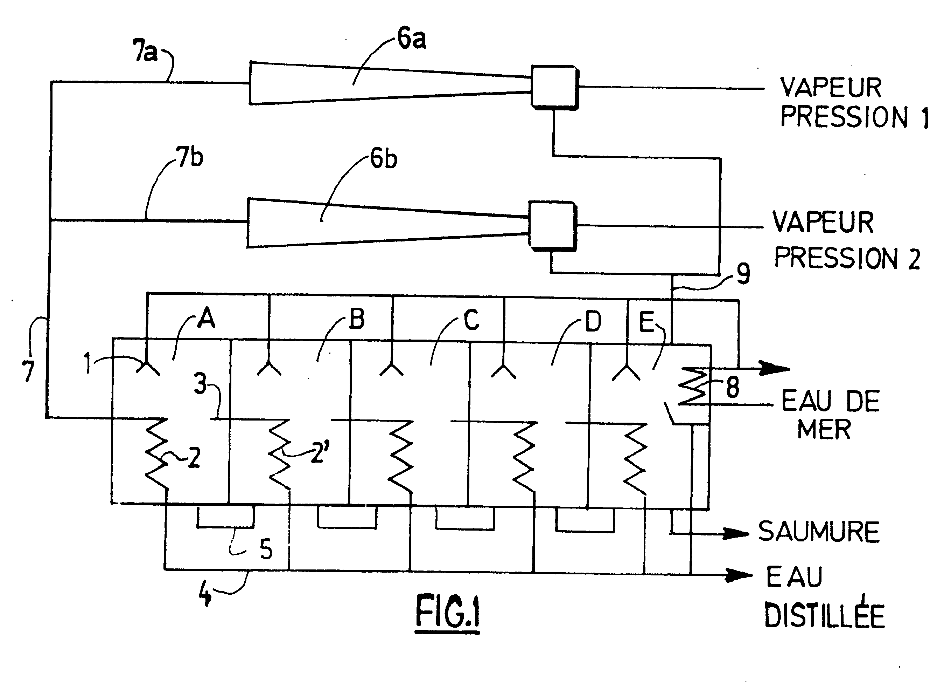

L'installation de dessalement d'eau de mer représentée sur la figure 1 comprend une série de cinq effets A, B, C, D, E. Le premier effet A est alimenté par la vapeur de chauffe arrivant par la conduite 7 dans l'échangeur de chaleur 2 du premier effet. L'échangeur de chaleur 2 est refroidi par de l'eau de mer introduite par des tuyères d'arrosage 1 et s'écoulant en film mince sur la face externe de l'échangeur de chaleur. La vapeur de chauffe se condense dans l'échangeur de chaleur 2 et quitte l'effet A sous forme d'eau distillée 4. La chaleur de condensation de la vapeur de chauffe dans l'échangeur de chaleur 2 fournit l'énergie de vaporisation nécessaire pour transformer en vapeur une partie de l'eau de mer s'écoulant en film mince sur la face externe de l'échangeur de chaleur 2. Cette vapeur d'eau passe par la conduite 3 vers l'intérieur de l'échangeur de chaleur 2' de l'effet B suivant semblable à l'effet A à ceci près qu'il est à une pression légèrement plus faible ce qui permet une nouvelle étape de condensation de vapeur et d'évaporation d'eau de mer. Les gaz non condensables tels que O_{2,} N₂ et CO₂, sont aspirés à partir de chacun des effets A, B, C, D et E par un moyen d'aspiration (non représenté). L'eau de mer concentrée en sels (saumure) passe d'effet en effet grâce à un système de conduites 5 et quitte l'installation à la sortie du dernier effet E. Le dernier effet E comprend un échangeur de chaleur 8 permettant un préchauffage de l'eau de mer introduite dans les différents effets par les tuyères 1 et l'évacuation de chaleur excédentaire. Le dernier effet E est raccordé via une conduite en T 9 à deux éjectrocompresseurs 6a et 6b fonctionnant à une pression de vapeur motrice respectivement élevée (Pression 1) et faible (Pression 2). Ces deux éjectocompresseurs fonctionnent alternativement mais jamais simultanément. Lorsque l'éjectocompresseur haute pression 6a est actif, la voie de passage de la vapeur à travers le compresseur basse pression 6b doit être obturée. Cette obturation peut se faire à n'importe quel point entre le point de bifurcation de la conduite en T 9 et le point de jonction des conduites 7a et 7b. De façon analogue, la voie de passage de la vapeur à travers le compresseur 6a doit être obturée lorsque le compresseur 6b fonctionne.

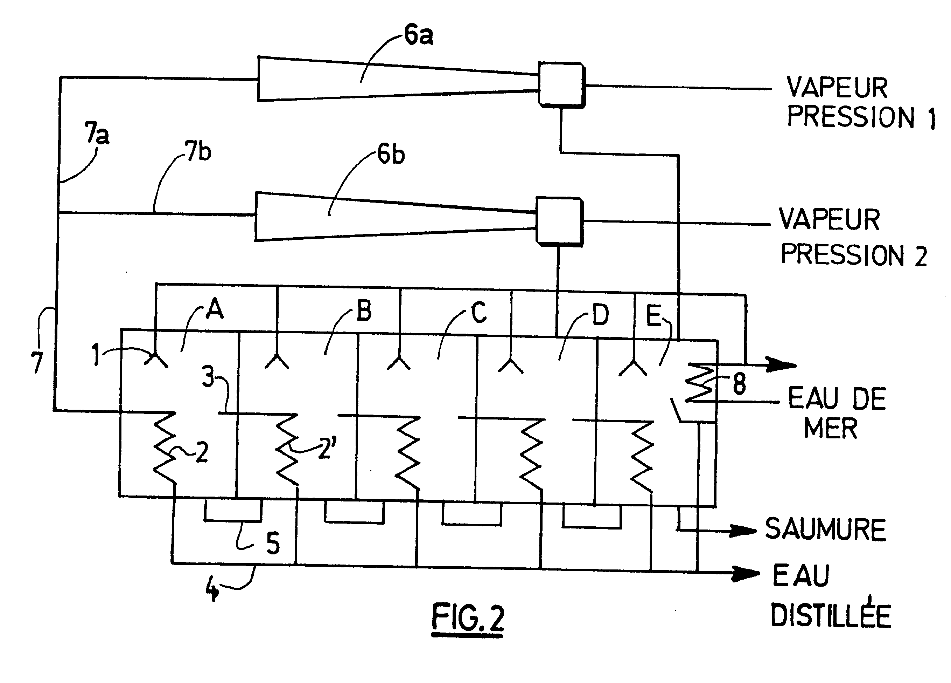

La figure 2 montre un deuxième mode de réalisation d'une installation MED-TVC selon l'invention qui diffère de celui représenté sur la figure 1 par le fait que les deux éjectocompresseurs prélèvent la vapeur d'eau basse pression à recycler non pas dans un même effet, mais dans deux effets D et E différents.

## Revendications

1. Installation de dessalement d'eau de mer par distillation à effets multiples (MED) avec thermocompression de vapeur (TVC), conçue pour être couplée à une centrale thermique, comprenant
(A) une série de cellules de distillation (effets A, B, C, D, E), chaque cellule étant constituée
• d'une enceinte fermée comportant au moins un moyen (1) conçu pour faire couler de l'eau de mer en film mince sur un échangeur de chaleur (2) chauffé par de la vapeur d'eau jusqu'à une température suffisante pour vaporiser une partie de l'eau de mer s'écoulant en film mince sur l'échangeur de chaleur,
• d'un moyen (3) conçu pour amener la vapeur d'eau ainsi formée dans l'échangeur de chaleur (2') de l'effet suivant,
• d'un moyen (4) d'évacuation de l'eau liquide formée par condensation de la vapeur d'eau dans l'échangeur de chaleur,
• d'un moyen d'aspiration des gaz incondensables (O₂, N₂, CO₂),
• d'un moyen (5) d'évacuation de la saumure restant après évaporation d'une partie de l'eau de mer,
chaque effet étant adapté pour fonctionner à une température et une pression inférieures à celles de l'effet précédent, et
(B) un moyen de thermocompression (6) permettant de comprimer une partie de la vapeur d'eau V_{A} émise par un ou plusieurs des effets (B à E) et de la réinjecter dans le premier effet (A),
**caractérisée par le fait que** le moyen de thermocompression (6) est conçu de manière à pouvoir fonctionner, alternativement, à deux pressions de vapeur motrice V_{M} différentes,
et en ce que le moyen de thermocompression est constitué :
soit d'au moins deux éjectocompresseurs (6a, 6b) différents conçus de manière à pouvoir fonctionner à des pressions de vapeur motrice V_{M} différentes et montés en parallèle entre le premier effet (A) et le ou les effets de prélèvement de la vapeur d'eau (B à E),
soit d'un éjectocompresseur à buse d'injection amovible susceptible d'être remplacée par une autre buse conçue de manière à pouvoir fonctionner à une pression de vapeur motrice V_{M} différente.

2. Installation de dessalement d'eau de mer par distillation à effets multiples avec thermocompression de vapeur selon la revendication 1 lorsque le moyen de thermocompression comprend au moins deux éjectocompresseurs, **caractérisée par le fait qu'**au moins un des éjectocompresseurs (6a, 6b) est un ensemble de plusieurs éjectocompresseurs montés en parallèle et conçus de manière à pouvoir fonctionner dans des conditions identiques.

3. Installation de dessalement d'eau de mer par distillation à effets multiples avec thermocompression de vapeur selon la revendication 1, **caractérisée par le fait que** le moyen de thermocompression (6) est constitué de deux ou trois éjectocompresseurs conçus de manière à pouvoir fonctionner avec des pressions de vapeur motrice V_{M} différentes.

4. Procédé de dessalement d'eau de mer par distillation à effets multiples (MED) avec thermocompression de vapeur (TVC) utilisant une installation selon l'une des revendications précédentes, comprenant les étapes suivantes :
(a) vaporisation, dans le premier effet (A) d'une série d'effets (A à E), d'eau de mer s'écoulant en film mince sur un premier échangeur de chaleur (2) chauffé par de la vapeur d'eau jusqu'à une température suffisante pour vaporiser ladite eau de mer,
(b) le transfert de la vapeur d'eau formée, en tant que fluide caloporteur dans l'échangeur de chaleur (2') de l'effet suivant fonctionnant à une température et une pression inférieures à celles de l'effet précédent,
(c) la condensation de la vapeur d'eau dans l'échangeur de chaleur (2') de l'effet suivant et,
(d) grâce à la chaleur de condensation libérée, la vaporisation d'eau de mer s'écoulant en film mince sur ledit échangeur de chaleur, la succession des étapes (b) à (d) étant répétée autant de fois que l'installation comporte d'effets supplémentaires fonctionnant chacun à une température et une pression inférieures à celles de l'effet précédent,
(e) l'aspiration et la compression d'une partie de la vapeur d'eau V_{A} sortant d'un des effets (effets de prélèvement) par un éjectocompresseur (6a, 6b) alimenté par de la vapeur motrice V_{M} provenant de la turbine d'une centrale thermique, et
(f) réinjection du mélange V_{A} + V_{M} comprimé en tant que fluide caloporteur dans l'échangeur de chaleur du premier effet de l'étape (a),
**caractérisé par le fait qu'**en cas de modification importante de la pression de la vapeur motrice V_{M} disponible en sortie de turbine, on fait fonctionner l'installation de dessalement avec un éjectocompresseur différent (6b, 6a) ou avec le même éjectocompresseur modifié par remplacement de sa buse d'injection, travaillant à une pression de vapeur motrice V_{M} supérieure ou inférieure à celle du premier éjectocompresseur ou de l'éjectocompresseur non modifié respectivement.

5. Procédé de dessalement d'eau de mer selon la revendication 4,
**caractérisé par le fait que** l'on fait fonctionner l'installation de dessalement alternativement avec deux ou trois éjectocompresseurs ou alternativement avec deux ou trois buses amovibles, travaillant chacun(e) à une pression motrice V_{M} différente.

6. Procédé de dessalement d'eau de mer selon la revendication 4 ou 5, **caractérisé par le fait qu'**au moins un des éjectocompresseurs travaille à une pression de vapeur motrice V_{M} comprise entre 1,5 et 8 bars, de préférence entre 2 et 5 bars, et qu'au moins un autre éjectocompresseur travaille à une pression de vapeur motrice comprise entre 10 et 50 bars, de préférence entre 15 et 45 bars et en particulier entre 20 et 40 bars.

7. Procédé de dessalement d'eau de mer selon l'une des revendications 4 à 6, **caractérisé par le fait que** les différents éjectocompresseurs (6a, 6b) aspirent et compriment de la vapeur d'eau V_{A} provenant d'un seul et même effet de prélèvement.

8. Procédé de dessalement d'eau de mer selon l'une des revendications 4 à 6, **caractérisé par le fait que** les différents éjectocompresseurs (6a, 6b) aspirent et compriment de la vapeur d'eau V_{A} provenant respectivement d'effets de prélèvement différents.

9. Procédé de dessalement d'eau de mer selon la revendication 8,
**caractérisé par le fait que** l'éjectocompresseur (6a) fonctionnant avec la pression de vapeur motrice V_{M} la plus importante aspire de la vapeur d'eau V_{A} à partir de l'effet de prélèvement (E) le plus en aval dans la série d'effets et que l'éjectocompresseur (6b) fonctionnant avec la pression de vapeur motrice V_{M} la plus faible aspire de la vapeur d'eau V_{A} à partir de l'effet de prélèvement (D) le plus en amont dans la série d'effets.

## Claims

1. Installation for seawater desalination by multiple effect distillation (MED) with thermal vapour compression (TVC) designed for coupling with a thermal power plant, comprising:
(A) a series of distillation cells (effects A, B, C, D, E), each cell consisting of:
• a closed vessel comprising at least one means (1) designed to make seawater fall as a thin film onto a heat exchanger (2) heated by the steam to a sufficient temperature to vaporize a portion of the seawater falling as a thin film onto the heat exchanger,
• means (3) designed to convey the steam thus formed to the heat exchanger (2') of the next effect,
• means (4) for removing liquid water formed by condensation of the steam in the heat exchanger,
• means for sucking the non-condensable gases (O₂, N₂, CO₂),
• means (5) for removing the brine remaining after evaporation of a portion of the seawater,
each effect being adapted to operate at a lower temperature and pressure than those of the previous effect, and
(B) thermal vapour compression means (6) for compressing a portion of the water vapour V_{A} issuing from one or a plurality of the effects (B to E) and for recycling it to the first effect (A),
**characterised in that** the thermal vapour compression means (6) is designed to be able to operate alternately at two different motive vapour pressures V_{M},
and **in that** the thermal vapour compression means consist of:
either at least two different steam jet ejectors (6a, 6b) designed to be able to operate at different motive vapour pressures V_{M} and mounted in parallel between the first effect (A) and the steam offtake effect or effects (B to E),
or a steam jet ejector with a removable injection nozzle that can be replaced by another nozzle designed to be able to operate at a different motive vapour pressure V_{M}.

2. Installation for seawater desalination by multiple effect distillation with thermal vapour compression according to Claim 1 when the thermal vapour compression comprises at least two steam jet ejectors, **characterised in that** at least one of the steam jet ejectors (6a, 6b) is a set of a plurality of steam jet ejectors mounted in parallel and designed to be able to operate under identical conditions.

3. Installation for seawater desalination by multiple effect distillation with thermal vapour compression according to Claim 1, **characterised in that** the thermal vapour compression means (6) consists of two or three steam jet ejectors designed to be able to operate with different motive vapour pressures V_{M}.

4. Method for seawater desalination by multiple effect distillation (MED) with thermal vapour compression (TVC) using an installation according to one of the preceding claims comprising the following steps:
(a) vaporization in the first effect (A) of a series of effects (A to E) of seawater falling as a thin film onto a first heat exchanger (2) heated by steam to a sufficient temperature to vaporize said seawater,
(b) transfer of the water vapour formed, as heat transfer fluid, to the heat exchanger (2') of the next effect operating at a lower temperature and pressure than those of the previous effect,
(c) condensation of the water vapour in the heat exchanger (2') of the next effect and,
(d) use of the heat of condensation released to vaporize seawater falling as a thin film onto said heat exchanger,
the succession of steps (b) to (d) being repeated as many times as the installation comprises additional effects each operating at a lower temperature and pressure than those of the previous effect,
(e) suction and compression of a portion of the water vapour V_{A} leaving one of the effects (offtake effects) by a steam jet ejector (6a, 6b) supplied with motive vapour V_{M} from the turbine of a thermal power plant, and
(f) recycling of the compressed mixture V_{A} + V_{M} as heat transfer fluid to the heat exchanger of the first effect of step (a),
**characterised in that** in case of a significant change in the motive vapour pressure V_{M} available at the turbine exit, the desalination installation is operated with a different steam jet ejector (6b, 6a) or with the same steam jet ejector modified by replacement of its injection nozzle, operating at a higher or lower motive vapour pressure V_{M} than that of the first steam jet ejector or of the unmodified steam jet ejector respectively.

5. Method for seawater desalination according to Claim 4, **characterised in that** the desalination installation is operated alternately with two or three steam jet ejectors or alternately with two or three removable nozzles, each operating at a different motive pressure V_{M}.

6. Method for seawater desalination according to either of Claims 4 and 5, **characterised in that** at least one of the steam jet ejectors operates at a motive vapour pressure V_{M} between 1.5 and 8 bar, preferably between 2 and 5 bar, and that at least one other steam jet ejector operates at a motive vapour pressure between 10 and 50 bar, preferably between 15 and 45 bar and in particular between 20 and 40 bar.

7. Method for seawater desalination according to one of Claims 4 to 6, **characterised in that** the various steam jet ejectors (6a, 6b) suck and compress water vapour V_{A} from one and the same offtake effect.

8. Method for seawater desalination according to one of Claims 4 to 6, **characterised in that** the various steam jet ejectors (6a, 6b) respectively suck and compress water vapour V_{A} from different offtake effects.

9. Method for seawater desalination according to Claim 8, **characterised in that** the steam jet ejector (6a) operating with the higher motive vapour pressure V_{M} sucks water vapour V_{A} from the offtake effect (E) furthest downstream in the series of effects, and **in that** the steam jet ejector (6b) operating with the lower motive vapour pressure V_{M} sucks water vapour V_{A} from the offtake effect (D) furthest upstream in the series of effects.

## Patentansprüche

1. Meerwasserentsalzungsanlage mit Multi-Effekt-Destillation (MED) mit thermischer Dampfkompression (TVC), die konzipiert ist an ein Heizkraftwerk angeschlossen zu werden, umfassend
(A) eine Reihe von Destillationszellen (Ausführungen A, B, C, D, E), wobei jede Zelle aus folgendem gebildet wird:
• einer geschlossenen Wand, die wenigstens ein Mittel (1) umfasst, das konzipiert ist, um Meerwasser in einem dünnen Film über einen Wärmetauscher (2) fließen zu lassen, der durch Wasserdampf bis zu einer Temperatur erwärmt wird, die ausreicht, um einen Teil des in einem dünnen Film über den Wärmetausche strömenden Meerwassers zu verdampfen,
• einem Mittel (3), das konzipiert ist, um den so in dem Wärmetauscher (2') gebildeten Wasserdampf in die nachfolgende Ausführung einzubringen,
• einem Mittel (4) zum Evakuieren des durch Kondensation des Wasserdampfs in dem Wärmetauscher gebildeten flüssigen Wassers,
• einem Mittel zum Ansaugen von nicht kondensierbaren Gasen (O₂, N₂, CO₂),
• einem Mittel (5) zum Evakuieren der nach dem Verdampfen eines Teils des Meerwassers verbleibenden Salzlake,
wobei jede Ausführung geeignet ist bei einer Temperatur und einem Druck, die geringer sind als die der vorangegangenen Ausführung, zu arbeiten, und
(B) einem Mittel der Thermokompression (6), das es erlaubt, einen Teil des von einer oder mehreren Ausführungen (B bis E) abgegebenen Wasserdampfs V_{A} zu komprimieren und diesen in die erste Ausführung (A) wieder einzuschleusen,
**dadurch gekennzeichnet, dass** das Mittel der Thermokompression (6) derart konzipiert ist, dass es alternativ mit zwei verschiedenen Drücken der Dampfkraft V_{M} arbeiten kann,
und **dadurch**, dass das Mittel der Thermokompression aus folgendem gebildet wird:
entweder aus wenigstens zwei unterschiedlichen Strahlverdichtern (6a, 6b), die derart konzipiert sind, dass sie bei unterschiedlichen Drücken der Dampfkraft V_{M} arbeiten können und die parallel zwischen der ersten Ausführung (A) und
der oder den Ausführung/en der Entnahme des Wasserdampfs (B bis E) montiert sind,
oder einem Strahlverdichter mit einer abnehmbaren Einspritzdüse, die geeignet ist durch eine andere Düse ersetzt zu werden, welche derart konzipiert ist, dass sie bei einem unterschiedlichen Druck der Dampfkraft V_{M} arbeiten kann.

2. Meerwasserentsalzungsanlage mit Multi-Effekt-Destillation mit thermischer Dampfkomprossion nach Anspruch 1, die, wenn das Mittel der Thermokompression wenigstens zwei Strahlverdichter umfasst, **dadurch gekennzeichnet ist, dass** wenigstens einer der Strahlverdichter (6a, 6b) eine Gesamtheit mehrerer parallel montierter Strahlverdichter ist, die derart konzipiert sind, dass sie unter identischen Bedingungen arbeiten können.

3. Meerwasserentsalzungsanlage mit Multi-Efiekt-Destillation mit thermischer Dampfkompression nach Anspruch 1, **dadurch gekennzeichnet, dass** das Mittel der Thermokompression (6) aus zwei oder drei Strahlverdichtern gebildet wird, die derart konzipiert sind, dass sie mit unterschiedlichen Drücken der Dampfkraft V_{M} arbeiten können.

4. Verfahren zum Entsalzen von Meerwasser mit Multi-Effekt-Destillation (MED) mit thermischer Dampfkompression (TVC), bei dem eine Anlage nach einem der vorhergehenden Ansprüche verwendet wird, das die folgenden Schritte umfasst:
(a) Verdampfen, in einer ersten Ausführung (A) einer Reihe von Ausführungen (A bis E) von in einem dünnen Film auf einem ersten Wärmetauscher (2) strömendem Meerwasser, der durch Wasserdampf bis zu einer Temperatur erwärmt wird, die ausreicht, um das Meerwasser zu verdampfen,
(b) Transfer des gebildeten Wasserdampfs als Kühlwasser in den Wärmetauscher (2') der nachfolgenden Ausführung, die bei einer Temperatur und einem Druck arbeitet, die geringer sind als die der vorangegangenen Ausführung,
(c) Kondensation des Wasserdampfs in dem Wärmetauscher (2') der nachfolgenden Ausführung, und
(d) infolge der freigesetzten Kondensations-Wärrne, Verdampfen des in einem dünnen Film über den Wärmetauscher strömenden Meerwassers,
wobei die Aufeinanderfolge der Schritte (b) bis (d) so oft wiederholt wird, wie die Anlage zusätzliche Ausführungen umfasst, von denen jede bei einer Temperatur und einem Druck arbeitet, die geringer sind als die der vorangegangenen Ausführung,
(e) Ansaugen und Komprimieren eines Teils des aus einer der Ausführungen (Ausführungen der Entnahme) austretenden Wasserdampfs V_{A} durch einen Strahlverdichter (6a, 6b), der mit aus einer Turbine eines Heizkraftwerks stammender Dampfkraft V_{M} beaufschlagt wird, und
(f) Wiedereinschleusen der komprimierten Mischung V_{A} + V_{M} als Kühlwasser in den Wärmetauscher der ersten Ausführung des Schritts (a),
**dadurch gekennzeichnet, dass** im Fall einer erheblichen Veränderung des am Ausgang der Turbine vorhandenen Drucks der Dampfkraft V_{M} die Entsalzungsanlage mit einem unterschiedlichen Strahlverdichter (6a, 6b) oder mit dem gleichen Strahlverdichter betrieben wird, der durch Ersetzen dessen Einspritzdüse modifiziert wird, die bei einem Druck der Dampfkraft V_{M} arbeitet, die höher oder niedriger als die des ersten Strahlverdichters, beziehungsweise des nicht modifizierten Strahlverdichters ist.

5. Verfahren zum Entsalzen von Meerwasser nach Anspruch 4, **dadurch gekennzeichnet, dass** die Entsalzungsanlage alternativ mit zwei oder drei Strahlverdichtern oder alternativ mit zwei oder drei abnehmbaren Düsen arbeitet, von denen jede(r) bei einem unterschiedlichen Druck der Dampfkraft V_{M} arbeitet.

6. Verfahren zum Entsalzen von Meerwasser nach Anspruch 4 oder 5, **dadurch gekennzeichnet, dass** wenigstens einer der Strahlverdichter bei einem Druck der Dampfkraft V_{M} arbeitet, der zwischen 1,5 und 8 bar liegt, bevorzugt zwischen 2 und 5 bar, und dass wenigstens ein anderer Strahlverdichter bei einem Druck der Dampfkraft arbeitet, der zwischen 10 und 50 bar liegt, bevorzugt zwischen 15 und 45 bar, insbesondere zwischen 20 und 40 bar.

7. Verfahren zum Entsalzen von Meerwasser nach einem der Ansprüche 4 bis 6, **dadurch gekennzeichnet, dass** die unterschiedlichen Strahlverdichter (6a, 6b) den aus ein und derselben Ausführung der Entnahme stammenden Wasserdampf V_{A} ansaugen und komprimieren.

8. Verfahren zum Entsalzen von Meerwasser nach einem der Ansprüche 4 bis 6, **dadurch gekennzeichnet, dass** die unterschiedlichen Strahtverdiehter (6a, 6b) den aus den jeweiligen unterschiedlichen Ausführungen der Entnahme stammenden Wasserdampf V_{A} ansaugen und komprimieren.

9. Verfahren zum Entsalzen von Meerwasser nach Anspruch 8, **dadurch gekennzeichnet, dass** der mit dem beträchtlichsten Druck der Dampfkraft V_{M} arbeitende Strahlverdichter (6a) den Wasserdampf V_{A} von der in der Reihe der Ausführungen am weitesten stromabwärtigen Ausführung (E) an ansaugt, und dass der mit dem schwächsten Druck der Dampfkraft V_{M} arbeitende Strahlverdichter (6b) den Wasserdampf V_{A} von der in der Reihe der Ausführungen am weitesten stromaufwärtigen Ausführung der Entnahme (D) an ansaugt.
